# EUROPÄISCHE PATENTSCHRIFT

(11) **EP 3 853 481 B1**
(45) Veröffentlichungstag und Bekanntmachung des Hinweises auf die Patenterteilung: **11.10.2023**
(21) Anmeldenummer: 19752700.5
(22) Anmeldetag: 09.08.2019
(51) Int. Cl.: F04D 17/10, F04D 29/44, F04D 29/68

(54) **VERDICHTER**
COMPRESSOR
COMPRESSEUR

(30) Priorität: 19.09.2018 DE 102018215888
(43) Veröffentlichungstag der Anmeldung: 28.07.2021
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE); OTT, Tobias Reinhard, 70563 Stuttgart (DE)
(86) Internationale Anmeldenummer: PCT/EP2019/071445
(87) Internationale Veröffentlichungsnummer: WO 2020/057855

(56) Entgegenhaltungen:
- EP-A1- 1 061 265
- WO-A1-2017/140852
- JP-U- H 078 597
- US-A1- 2012 171 030

## Beschreibung

Die Erfindung betrifft einen Verdichter mit einem Diffusor, insbesondere für ein Brennstoffzellensystem, gemäß dem Oberbegriff des Anspruchs 1.

### Stand der Technik

Ein solcher Verdichter ist durch die US 2012/171030 A1 bekannt. Dieser Verdichter weist einen Diffusor mit einem sich erweiternden Abschnitt auf, der eine definierte Länge in einer Hauptströmungsrichtung einer Strömung aufweist, um im Betrieb des Verdichters ein unerwünschtes Ablösen der Strömung zu verhindern. Der Diffusor weist in dem sich erweiternden Abschnitt eine Diffusorgeometrie mit Toträumen auf, die in der Strömung zu einer gewünschten Ausbildung von Wirbeln dienen, deren Strömungsrichtung bezogen auf die Hauptströmungsrichtung durch den sich erweiternden Abschnitt des Diffusors nach außen gerichtet ist, in Richtung einer Wandung, die den sich erweiternden Abschnitt des Diffusors begrenzt.

Durch die JP H07 8597 U ist ein Verdichter bekannt, der einen Diffusor mit einem sich erweiternden Abschnitt aufweist, der eine definierte Länge in einer Hauptströmungsrichtung einer Strömung aufweist, um im Betrieb des Verdichters ein unerwünschtes Ablösen der Strömung zu verhindern. Der Diffusor weist in dem sich erweiternden Abschnitt eine Diffusorgeometrie mit Toträumen auf, die in der Strömung zu einer gewünschten Ausbildung von Wirbeln dienen, deren Strömungsrichtung bezogen auf die Hauptströmungsrichtung durch den sich erweiternden Abschnitt des Diffusors nach außen gerichtet ist, in Richtung einer Wandung, die den sich erweiternden Abschnitt des Diffusors begrenzt.

Durch die EP 1 061 265 A1 ist ein Verdichter bekannt, der einen Diffusor mit einem sich erweiternden Abschnitt aufweist, der eine definierte Länge in einer Hauptströmungsrichtung einer Strömung aufweist, um im Betrieb des Verdichters ein unerwünschtes Ablösen der Strömung zu verhindern. Der Diffusor weist in dem sich erweiternden Abschnitt eine Diffusorgeometrie mit Toträumen auf, die in der Strömung zu einer gewünschten Ausbildung von Wirbeln dienen, deren Strömungsrichtung bezogen auf die Hauptströmungsrichtung durch den sich erweiternden Abschnitt des Diffusors nach außen gerichtet ist, in Richtung einer Wandung, die den sich erweiternden Abschnitt des Diffusors begrenzt.

### Offenbarung der Erfindung

Aufgabe der Erfindung ist es, einen Verdichter mit einem Diffusor, insbesondere für ein Brennstoffzellensystem, insbesondere funktionell und/oder im Hinblick auf den benötigten Bauraum, zu verbessern.

Die Aufgabe ist bei einem Verdichter mit einem Diffusor, insbesondere für ein Brennstoffzellensystem, dadurch gelöst, dass die Wellen des Faltenbalgs so ausgeführt und angeordnet sind, dass Innendurchmesser der Wellen in der Hauptströmungsrichtung zunehmen, um die Diffusorgeometrie mit den Toträumen darzustellen. Die Innendurchmesser der Wellen des Faltenbalgs stellen sozusagen die nach innen gewandten Wellenberge dar. Die Wellentäler zwischen den Wellenbergen stellen die Toträume in der Diffusorgeometrie dar. Der Faltenbalg wird vorteilhaft mit einer geeigneten Hülse in einer entsprechenden Ausnehmung am Diffusorauslass fixiert. Der Faltenbalg kann mit Hilfe der Hülse zum Beispiel weiter zusammengedrückt werden, um einen Abstand von Fußbereichen oder Wellenbergen des Faltenbalgs zu verringern. Optional kann dies während einer Endprüfung dynamisch für jeden einzelnen Verdichter oder Kompressor stattfinden.

Der Faltenbalg ist zum Beispiel aus einem metallischen Material gebildet. Der Faltenbalg kann aber auch aus einem geeigneten Kunststoffmaterial oder Gummimaterial gebildet sein. Der Faltenbalg ist im Betrieb des Verdichters vorteilhaft so steif und stabil, dass sich der Faltenbalg im normalen Betrieb des Verdichters nicht verformt. Allerdings ist das Material, aus dem der Faltenbalg gebildet ist, vorteilhaft so flexibel, dass der Faltenbalg bei der Herstellung und/oder Montage verformt werden kann, um die Diffusorgeometrie mit den Toträumen gezielt zu verändern.

Ein bevorzugtes Ausführungsbeispiel des Verdichters ist dadurch gekennzeichnet, dass die Diffusorgeometrie mit den Toträumen variabel ist, um einen Abstand zwischen den Toträumen in der Hauptströmungsrichtung, eine Gestalt der Toträume und/oder eine Größe der Toträume gezielt zu verändern. So kann bedarfsabhängig, zum Beispiel bei der Herstellung, insbesondere bei der Montage, des Verdichters eine definierte Wirkung der Diffusorgeometrie mit den Toträumen eingestellt werden. So kann zum Beispiel während einer Endprüfung des Verdichters eine einfache Anpassung der Diffusorgeometrie mit den Toträumen vorgenommen werden. Dadurch wird zum Beispiel eine axiale Verschiebung einer Diffusorauslassfläche in Bezug zu einer Diffusorlänge ermöglicht.

Ein weiteres bevorzugtes Ausführungsbeispiel des Verdichters ist dadurch gekennzeichnet, dass die Toträume spiralförmig in dem sich erweiternden Abschnitt des Diffusors angeordnet sind. Die Toträume können zum Beispiel gewindeartig in dem sich erweiternden Abschnitt des Diffusors angeordnet sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine vereinfachte Darstellung eines Verdichters in einem Brennstoffzellensystem in der Draufsicht;
Figur 2 eine vergrößerte und insbesondere im Bereich eines sich erweiternden Abschnitts eines nicht erfindungsgemäßen Diffusors geschnittene Darstellung eines Ausschnitts aus Figur 1;
Figur 3 eine nicht erfindungsgemäße ähnliche Darstellung wie in Figur 2 mit Kreisringscheiben zur Darstellung einer Diffusorgeometrie mit Toträumen in dem sich erweiternden Abschnitt des Diffusors;
Figur 4 die Darstellung eines vergrößerten Ausschnitts aus Figur 3 mit Pfeilen zur Veranschaulichung der Strömungsverhältnisse durch den nicht erfindungsgemäßen Diffusor;
Figur 5 eine ähnliche Darstellung wie in Figur 3 mit einem erfindungsgemäßen Faltenbalg zur Darstellung der Diffusorgeometrie mit den Toträumen in dem sich erweiternden Abschnitt des Diffusors; und
Figur 6 eine vergrößerte Darstellung eines Ausschnitts aus Figur 5 mit Pfeilen zur Veranschaulichung der Strömungsverhältnisse durch den erfindungsgemäßen Diffusor.

### Beschreibung des Ausführungsbeispiels

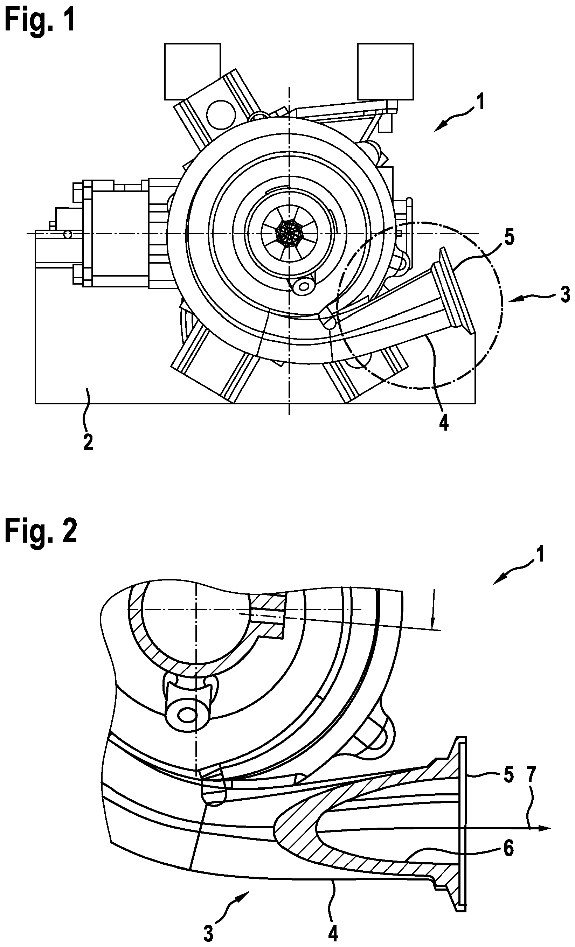

In Figur 1 ist ein Verdichter 1 eines Brennstoffzellensystems eines Brennstoffzellenantriebs eines Kraftfahrzeugs in der Draufsicht dargestellt. Der Verdichter 1 umfasst ein Gehäuse 2, in welchem ein Laufrad des als Luftkompressor ausgeführten Verdichters 1 drehbar angetrieben ist.

Der Verdichter 1 umfasst einen Diffusor 3 mit einem sich erweiternden Abschnitt 4. Im Betrieb des Verdichters 1 strömt ein Medium, insbesondere Luft, durch den sich erweiternden Abschnitt 4 des Diffusors 3 und tritt an einem Diffusorauslass 5 aus dem Gehäuse 2 aus. Der Aufbau und die Funktion des Verdichters 1 mit dem Diffusor 3 sind an sich bekannt und zum Beispiel in den deutschen Offenlegungsschriften DE 10 2012 221 303 A1 und DE 10 2011 080 804 A1 offenbart.

In Figur 2 sieht man, dass der Diffusor 3 in dem sich erweiternden Abschnitt 4 eine Diffusorgeometrie 6 aufweist. Durch einen Pfeil 7 ist eine Hauptströmungsrichtung einer am Diffusorauslass 5 aus dem Diffusor 3 des Verdichters 1 austretenden Luftströmung angedeutet. Die Diffusorgeometrie 6 ist zum Beispiel als starre Spirale ausgeführt, um eine unerwünschte Ablösung der Strömung in dem sich erweiternden Abschnitt 4 des Diffusors 3 zu verhindern.

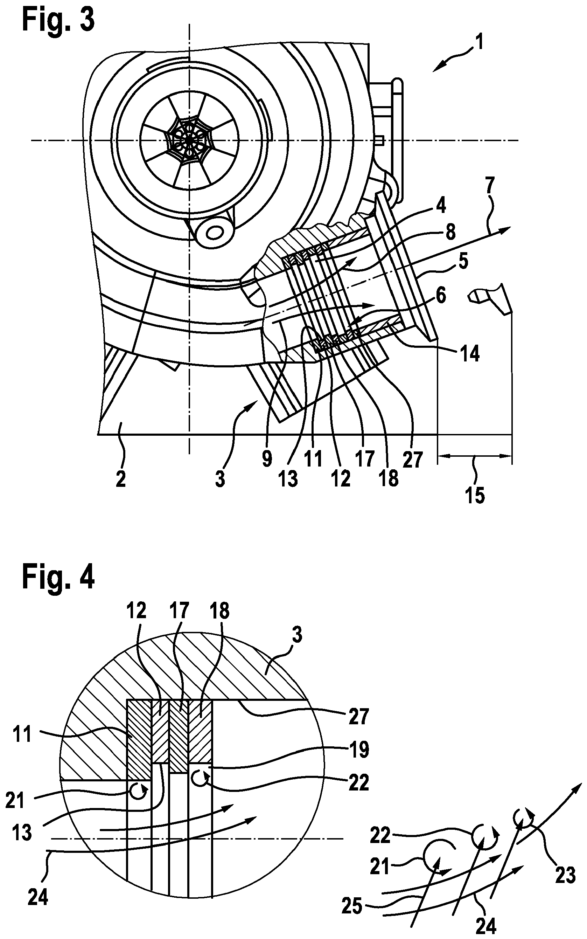

In den Figuren 3, 4 und 5, 6 sind Maßnahmen aufgezeigt, die zum einen dazu dienen, den für den Verdichter 1 benötigten Bauraum in einem Brennstoffzellensystem zu reduzieren. Darüber hinaus dienen die Maßnahmen dazu, einen optimalen Betriebsbereich des Verdichters 1 in einem Brennstoffzellensystem zu verbreitern beziehungsweise zu vergrößern.

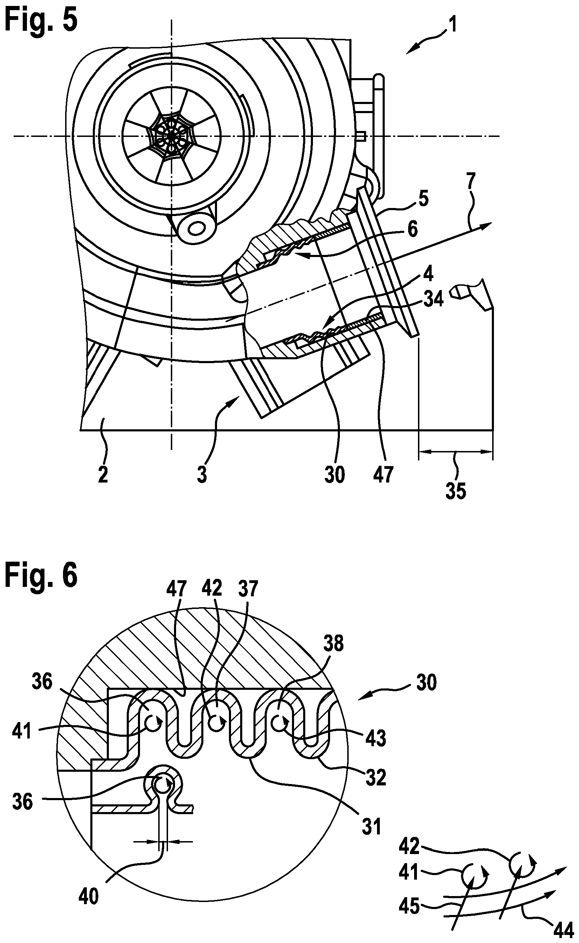

Zur Bezeichnung gleicher oder ähnlicher Teile werden in den Figuren 3, 4 und 5, 6 die gleichen Bezugszeichen verwendet wie in den Figuren 1 und 2. Um Wiederholungen zu vermeiden, wird auf die vorangegangene Beschreibung der Figuren 1 und 2 verwiesen. Im Folgenden wird hauptsächlich auf die Unterschiede zwischen den Darstellungen der Figuren 3, 4; 5, 6 und 1, 2 eingegangen. In den Figuren 3 und 4 ist eine nicht erfindungsgemäße Ausführungsform des Diffusors dargestellt, während in den Figuren 5 und 6 ein Ausführungsbeispiel eines erfindungsgemäßen Diffusors dargestellt ist.

In Figur 3 ist durch Pfeile 8, 9 eine Strömung durch den sich erweiternden Bereich 4 des Diffusors 3 angedeutet. Die Diffusorgeometrie 6 ist nicht erfindungsgemäß mit Hilfe von Kreisringscheiben 11, 12, 17, 18 realisiert. Die Kreisringscheiben 11, 12, 17, 18 haben alle den gleichen Außendurchmesser, mit dem die Kreisringscheiben 11, 12, 17, 18 an der Wandung 27 des Diffusors 3 anliegen. Die Kreisringscheiben 11, 12, 17, 18 haben unterschiedliche Innendurchmesser, um Toträume 13, 19 in dem sich erweiternden Abschnitt 4 des Diffusors 3 auszubilden.

Die Kreisringscheiben 11, 12, 17, 18 sind mit Hilfe einer Hülse 14 in dem sich erweiternden Abschnitt 4 des Diffusors 3 fixiert. Die Hülse 14 hat die Gestalt eines hohlen Kreiszylindermantels. Die Hülse 14 ist in den Diffusor 3 eingepresst. Alternativ kann die Hülse 14 auch in den Diffusor 3 eingeschraubt werden. Die Hülse 14 kann auch stoffschlüssig mit der Wandung 27 des Diffusors 3 verbunden sein.

Durch eine Bemaßungslinie 15 ist in Figur 3 angedeutet, dass der Diffusor 3 in der Hauptströmungsrichtung 7 deutlich kürzer als bei herkömmlichen Verdichtern ausgeführt werden kann. Die Verkürzung des Diffusors 3 wird durch einen segmentierten Aufbau mittels der Kreisringscheiben 11, 12, 17, 18 ermöglicht, die, wie man in der vergrößerten Darstellung der Figur 4 sieht, unterschiedlich große Innendurchmesser aufweisen.

Die Kreisringscheiben 11, 12, 17, 18 mit den unterschiedlich großen Innendurchmessern ermöglichen auch bei der verkürzten Länge des Diffusors 3 eine unerwünschte Ablösung der Luftströmung 8, 9 in dem sich erweiternden Abschnitt 4 von der Wandung 27.

In der vergrößerten Darstellung der Figur 4 sieht man, dass die Kreisringscheiben 11, 12, 17, 18 so angeordnet sind, dass jede zweite Kreisringscheibe einen kleineren Durchmesser hat als die in der Hauptströmungsrichtung nachfolgende Kreisringscheibe. So entstehen kleine Toträume 13, 19 in der Strömung, die in Figur 4 durch Pfeile 24 angedeutet ist.

In den Toträumen 13, 19 bilden sich Wirbel 21 bis 23 aus, die in Figur 4 unterhalb des Ausbruchs vergrößert dargestellt sind. Die Wirbel 21 bis 23 haben beziehungsweise bewirken, aus Sicht der Hauptströmung 24 durch den Verdichter, eine Richtung nach außen zur Wandung 27 hin. Die Richtung beziehungsweise Strömungsrichtung der Wirbel 21 bis 23 ist in Figur 4 durch Pfeile 25 angedeutet.

In den Figuren 5 und 6 ist die Diffusorgeometrie 6 erfindungsgemäß mit Hilfe eines Faltenbalgs 30 realisiert. Der Faltenbalg 30 umfasst Wellen 31, 32, die zur Darstellung der Toträume 36 bis 38 in der Diffusorgeometrie 6 dienen. Der Faltenbalg 30 ist mit einer Hülse 34 innerhalb der Wandung 47 des Diffusors 3 fixiert.

Die Hülse 34 ist so oder so ähnlich ausgeführt wie die Hülse 14 in den Figuren 3 und 4. Durch eine Bemaßungslinie 35 ist in Figur 5 angedeutet, dass die Länge des Diffusors 3 in der Hauptströmungsrichtung 7 deutlich kleiner als bei einem herkömmlichen Verdichter ist.

Die Wandung 47 des Diffusors 3 ist zum Beispiel als Bohrung ausgeführt, die den Faltenbalg 30 aufnimmt und zentriert. Die Wellen 31, 32 des Faltenbalgs 30 sind erfindungsgemäß so angeordnet, dass jede zweite Welle einen größeren Durchmesser als die vorhergehende Welle hat, um den sich erweiternden Abschnitt 4 des Diffusors 3 zu bilden. In den Zwischenbereichen zwischen den Wellen 31, 32 bilden sich die kleinen Toträume 36 bis 38 für die Strömung beziehungsweise Hauptströmung 44.

In der Hauptströmung 44 bilden sich, wie bei der in Figur 4 dargestellten Ausführungsform, Wirbel 41 bis 43. Die Bereiche mit den Toträumen 36 bis 38 können mit Hilfe des Faltenbalgs 30 optimal an den Kompressor 1 angepasst werden, wenn zum Beispiel mit Hilfe der Hülse 34 ein durch eine Bemaßungslinie 40 in Figur 6 angedeuteter Abstand zwischen den Wellen 31, 32 verändert beziehungsweise eingestellt wird. Dieser Einstellvorgang kann zum Beispiel während einer Endprüfung dynamisch für jeden einzelnen Kompressor 1 durchgeführt werden.

Die Strömungsrichtung der Wirbel 41, 42, die, wie in Figur 4, durch Pfeile 45 angedeutet ist, zeigt aus Sicht der Hauptströmung 44 durch den Kompressor 1 nach außen zur Wandung 47. Dadurch wird vorteilhaft eine unerwünschte Ablösung der Hauptströmung 44 verhindert.

## Patentansprüche

1. Verdichter (1) mit einem Diffusor (3), insbesondere für ein Brennstoffzellensystem, mit einem sich erweiternden Abschnitt (4), der eine definierte Länge in einer Hauptströmungsrichtung (7) einer Strömung (44) aufweist, um im Betrieb des Verdichters (1) ein unerwünschtes Ablösen der Strömung (44) zu verhindern, wobei der Diffusor (3) in dem sich erweiternden Abschnitt (4) eine Diffusorgeometrie (6) mit Toträumen (36-38) aufweist, die in der Strömung (44) zu einer gewünschten Ausbildung von Wirbeln (41-43) dienen, deren Strömungsrichtung (45), bezogen auf die Hauptströmungsrichtung (7) durch den sich erweiternden Abschnitt (4) des Diffusors (3) nach außen gerichtet ist, in Richtung einer Wandung (47), die den sich erweiternden Abschnitt (4) des Diffusors (3) begrenzt, wobei in dem sich erweiternden Abschnitt (4) des Diffusors (3) ein vorzugsweise verstellbarer Faltenbalg (30) angeordnet ist, um die Diffusorgeometrie (6) mit den Toträumen (36-38) darzustellen, und wobei der Faltenbalg (30) Wellen (31, 32) umfasst, um die Toträume (36-38) der Diffusorgeometrie (6) darzustellen, **dadurch gekennzeichnet, dass** die Wellen (31, 32) des Faltenbalgs (30) so ausgeführt und angeordnet sind, dass Innendurchmesser der Wellen (31, 32) in der Hauptströmungsrichtung (7) zunehmen, um die Diffusorgeometrie (6) mit den Toträumen (36-38) darzustellen.

2. Verdichter nach Anspruch 1, **dadurch gekennzeichnet, dass** die Diffusorgeometrie (6) mit den Toträumen (36-38) variabel ist, um einen Abstand (40) zwischen den Toträumen (36-38) in der Hauptströmungsrichtung (7), eine Gestalt der Toträume (36-38) und/oder eine Größe der Toträume (36-38) gezielt zu verändern.

3. Verdichter nach einem der vorhergehenden Ansprüche, **dadurch gekennzeichnet, dass** die Toträume (36-38) spiralförmig in dem sich erweiternden Abschnitt (4) des Diffusors (3) angeordnet sind.

## Claims

1. Compressor (1) having a diffuser (3), in particular for a fuel cell system, having a widening section (4) which has a defined length in a main flow direction (7) of a flow (44) in order to prevent the flow (44) from being separated in an undesirable manner during operation of the compressor (1), wherein the diffuser (3) has, in the widening section (4), a diffuser geometry (6) with dead spaces (36-38) which are used in the flow (44) to desirably form eddies (41-43), the flow direction (45) of which, based on the main flow direction (7) through the widening section (4) of the diffuser (3), is directed outwards in the direction of a wall (47) which delimits the widening section (4) of the diffuser (3), wherein a preferably adjustable bellows (30) is arranged in the widening section (4) of the diffuser (3) in order to represent the diffuser geometry (6) with the dead spaces (36-38), and wherein the bellows (30) comprises folds (31, 32) in order to represent the dead spaces (36-38) of the diffuser geometry (6), **characterized in that** the folds (31, 32) of the bellows (30) are designed and arranged in such a manner that internal diameters of the folds (31, 32) increase in the main flow direction (7) in order to represent the diffuser geometry (6) with the dead spaces (36-38).

2. Compressor according to Claim 1, **characterized in that** the diffuser geometry (6) with the dead spaces (36-38) is variable in order to specifically change a distance (40) between the dead spaces (36-38) in the main flow direction (7), a shape of the dead spaces (36-38) and/or a size of the dead spaces (36-38) .

3. Compressor according to one of the preceding claims, **characterized in that** the dead spaces (36-38) are arranged helically in the widening section (4) of the diffuser (3).

## Revendications

1. Compresseur (1) comprenant un diffuseur (3), notamment pour un système de piles à combustible, comprenant une portion qui s'élargit (4), laquelle présente une longueur définie dans une direction d'écoulement principale (7) d'un écoulement (44) afin d'éviter un décollement indésirable de l'écoulement (44) pendant le fonctionnement du compresseur (1), le diffuseur (3) présentant, dans la portion qui s'élargit (4), une géométrie de diffuseur (6) avec des espaces morts (36-38) qui servent dans l'écoulement (44) à une formation souhaitée de tourbillons (41-43), dont la direction d'écoulement (45), en référence à la direction d'écoulement principale (7), est dirigée vers l'extérieur par la portion qui s'élargit (4) du diffuseur (3), en direction d'une paroi (47) qui délimite la portion qui s'élargit (4) du diffuseur (3), un soufflet (30) de préférence positionnable étant disposé dans la portion qui s'élargit (4) du diffuseur (3) afin de représenter la géométrie de diffuseur (6) avec les espaces morts (36-38), et le soufflet (30) comportant des ondulations (31, 32) afin de représenter les espaces morts (36-38) de la géométrie de diffuseur (6), **caractérisé en ce que** les ondulations (31, 32) du soufflet (30) sont réalisées et disposées de telle sorte que les diamètres intérieurs des ondulations (31, 32) augmentent dans la direction d'écoulement principale (7) afin de représenter la géométrie de diffuseur (6) avec les espaces morts (36-38).

2. Compresseur selon la revendication 1, **caractérisé en ce que** la géométrie de diffuseur (6) avec les espaces morts (36-38) est variable afin de modifier de manière ciblée un écart (40) entre les espaces morts (36-38) dans la direction d'écoulement principale (7), une configuration des espaces morts (36-38) et/ou une taille des espaces morts (36-38).

3. Compresseur selon l'une des revendications précédentes, **caractérisé en ce que** les espaces morts (36-38) sont disposés en forme de spirale dans la portion qui s'élargit (4) du diffuseur (3).
